# EUROPÄISCHE PATENTSCHRIFT

(11) **EP 1 862 407 B1**
(45) Veröffentlichungstag und Bekanntmachung des Hinweises auf die Patenterteilung: **14.12.2011**
(21) Anmeldenummer: 07108468.5
(22) Anmeldetag: 18.05.2007
(51) Int. Cl.: B65G 1/137

(54) **Verfahren zum Befüllen und/oder Entleeren einer Zwischenlagervorrichtung eines Kommissioniersystems**
Method for filling and/or emptying a buffer storage device of a picking system
Procédé destiné au remplissage et/ou à la vidange d'un dispositif de stockage intermédiaire d'un système de commissionnement

(30) Priorität: 02.06.2006 DE 102006025935
(43) Veröffentlichungstag der Anmeldung: 05.12.2007
(73) Patentinhaber: Dematic GmbH, 63073 Offenbach (DE)
(72) Erfinder: Stehr, Peter, 63179 Obertshausen (DE)
(74) Vertreter: Moser & Götze

(56) Entgegenhaltungen:
- EP-A- 0 205 390
- WO-A-99/14142
- DE-A1- 3 244 331
- DE-U1- 20 311 674
- DE-U1- 29 505 214
- US-A- 5 513 936

## Beschreibung

Die Erfindung betrifft ein Verfahren zum Befüllen und/oder Entleeren einer Zwischenlagervorrichtung eines Kommissioniersystems, bei dem nach dem Kommissioniervorgang die mit gesammelten Artikeln belegten und/oder mit Sammelmitteln zur Aufnahme der gesammelten Artikel belegten Aufnahmeplätze der Zwischenlagervorrichtung geleert werden.

Kommissioniersysteme, die nach dem Prinzip "Mann zur Ware" arbeiten, sind allgemein bekannt. Hierbei bewegt sich ein Kommissionierer gezielt durch einen Lagerbereich, sammelt Stückgüter beziehungsweise Waren - nachfolgend als Artikel bezeichnet - manuell ein und stellt diese zu einem Auftrag zusammen. Während des Kommissioniervorgangs lagert der Kommissionierer die bereits gesammelten Artikel in einem Sammelmittel zwischen, das auf einem Aufnahmeplatz einer Zwischenlagervorrichtung abgestellt ist. In üblicher Weise ist diese Zwischenlagervorrichtung als Wagen mit einer oder mehreren regalartig angeordneten Aufnahmeflächen ausgebildet. Die Aufnahmeflächen dienen als Aufnahmeplätze für die nebeneinander und/oder hintereinander abgestellten Sammelmittel. Der Wagen kann von Hand geschoben oder auch angetrieben sein. Die Sammelmittel können als Behälter, Kartons, Wannen oder Paletten ausgebildet sein. Zu Beginn des Kommissioniervorganges werden von dem Kommissionierer geeignete leere Sammelmittel per Hand in die Aufnahmeplätze der Sammelvorrichtung gestellt. Die Wegezeit pro Artikel stellt die entscheidende Größe für die Effektivität des Kommissioniersystems dar. Für eine Erhöhung der Effektivität werden mehrere Kommissionieraufträge zu einem Serienauftrag zusammengefasst, die parallel von einem Kommissionierer bearbeitet werden. Hierdurch wird eine höhere Pickdichte während eines Weges des Kommissionierers erreicht. Bei dieser parallelen Kommissionierung führt der Kommissionierer eine der Anzahl der Kommissionieraufträge entsprechende Anzahl von Sammelmitteln in der Zwischenlagervorrichtung mit. Der Kommissionierer kann hierbei zu Fuß oder mit einer Fahrhilfe den für den Kommissioniervorgang erforderlichen Weg zurücklegen. Am Ende des Kommissioniervorganges wird die Zwischenlagervorrichtung von dem Kommissionierer manuell entleert, d. h. die mit den gesammelten Artikeln befüllten Sammelmittel werden entnommen und an einen weiteren Förderer für den Weitertransport übergeben.

Grundsätzlich können die Kommissioniervorgänge auftragsbezogen - auch einstufig genannt - oder artikelbezogen - auch mehrstufig genannt - erfolgen. Auch kann der Lagerbereich ungeteilt oder in mehrere Kommissionierzonen geteilt sein, so dass der Kommissionierer im gesamten Lagerbereich oder nur einem Teil hiervon arbeitet.

Aus der DE 32 44 331 A1 ist ein selektives Überführungssystem bekannt, umfassend eine endlos Kettenanordnung, die an einem Strom von sich in einer bestimmten Richtung bewegenden Gegenständen so angeordnet wird, dass ein Teil der Kettenanordnung sich im Wesentlichen parallel zum Strom der Gegenstände bewegen kann, wobei die Kettenanordnung eine Vielzahl von Überführungseinrichtungen aufweist, die wahlweise im Wesentlichen quer zu der Kettenanordnung im Strom der Gegenstände hinein vorschiebbar sind, um sich an einem bestimmten Gegenstand anzulegen und ihn aus dem Strom der Gegenstände herauszuschieben, und eine zweite Einrichtung, die die endlos Kettenanordnung im Wesentlichen mit der gleichen linearen Geschwindigkeit wie der Strom der Gegenstände antreibt, und eine dritte Einrichtung, die auf die Lage eines bestimmten Gegenstandes im Strom relativ zur Lage der Überführunganordnung ansprechend mindestens eine Überführungseinrichtung zum Strom der Gegenstände hin ausfährt.

Aus der WO 99/14142 A1 ist eine Vorrichtung zum Ausleiten von Gegenständen, die auf einem Transporteur transportiert werden, mit einem oder mehreren Ausgleitsegmenten, die eine Strecke mit einem Transporteur synchron mitbewegbar sind und quer zur Transporteinrichtung einzeln aus- oder einfahrbar sind, um einen Gegenstand von dem Transporteur zu Schieben, bekannt, wobei das oder die Ausgleitsegmente in einem Schlitten in Transportrichtung nebeneinander einzeln aus- oder einfahrbar überführt sind, und der Schlitten in Transportrichtung hin und her bewegbar ist.

Aus der US 5,513,936 ist ein Hubtisch bekannt, der als Transfermechanismus dient, um Behälter zwischen verschiedenen Rollenbahnen zu transferieren. Der Hubtisch selber ist mit einer Rollbahn versehen, die in der Neigung verstellbar ist.

Aus der EP 0 205 390 A1 ein Verfahren zum Entladen und Laden von in horizontalen Schichten angeordneten Artikeln in oder aus Behältern bekannt, wobei ein Behälter verwendet wird, dessen senkrechte Wand entfernbar ist, in dem man den Behälter vor und in die Nähe eines Tisches stellt, dessen Breit- am Ende etwas geringer ist als die Innenabmessung der Seite der entfernbaren Wand des Behälters, sowie ein Tisch, auf den die zu ladenden oder zu entladenen Artikel gelegt werden, wobei die Seite des Behälters dessen entfernbare Wand entfernt worden ist dem genannten Tisch gegenüber angeordnet ist, die Höhe des Behälters eingestellt wird, sodass die untere Ebene der oberen Lage der oberen Schicht von Artikeln, die abgeladen werden sollen, leicht oberhalb des Tisches liegt oder leicht unterhalb des Tischniveaus, wenn die obere Ebene der oberen Schicht der Artikel schon im Behälter geladen ist, der Tisch in den Behälter geschoben wird um sein Ende in die Nähe des Endes der Schicht der Artikel zu bringen, die entladen werden soll oder in die Nähe des Endes der bereits geladenen Schicht von Artikeln, auf die die Artikelschicht geladenen werden soll, die sich an dem Tisch befindet, und die eine Schicht bildenden Artikel in einem Block vom Tisch transportiert werden, um sie auf der oberen Fläche der oberen Artikelschicht zu legen oder ausgehend von der oberen Artikelschicht, die sich in dem Behälter befindet, um sie auf den Tisch zu legen durch eine Verschiebung, gesteuert durch die Richtung der Länge der Artikel.

Aus der DE 295 05 214 U1 ist ein Regallager mindestens an einer Seite eines Ganges angeordneten Ziehregalen bekannt, die einzeln quer zum Gang in diesen hinein bewegbar bewegt werden können, wobei jedes Ziehregal an vorbestimmten Positionen Fächer enthält die parallel zum Gang ausgerichtet sind, und einer Transporteinrichtung, die ein längs des Ganges verfahrbaren Mast und einen am Mast in der Höhe verfahrbaren vertikal Schlitten mit einem im Längsrichtung zum Gang ausrichtbaren Manipulator Arm aufweist, wobei jedem Ziehregal ein eigenständig steuerbarer Antrieb zugeordnet ist, der das Bewegen des Ziehregales während des Fahrens der Transportvorrichtung erlaubt.

Ausgehend von diesem Stand der Technik liegt der Erfindung die Aufgabe zu Grunde, ein Verfahren zum Entleeren und/oder Befüllen einer Zwischenlagervorrichtung eines Kommissioniersystems,

Diese Aufgabe wird durch ein Verfahren zum Befüllen und/oder Entleeren einer Zwischenlagervorrichtung mit den Merkmalen des Anspruchs 1 gelöst. Vorteilhafte Ausgestaltungen der Erfindung sind in den Ansprüchen 2 bis 5 angegeben.

Erfindungsgemäß wird bei einem Verfahren zum Befüllen und/oder Entleeren einer Zwischenlagervorrichtung eines Kommissioniersystems, bei dem nach dem Kommissioniervorgang die mit gesammelten Artikeln belegten und/oder mit Sammelmitteln zur Aufnahme der gesammelten Artikel belegten Aufnahmeplätze der Zwischenlagervorrichtung geleert werden, eine Optimierung der Wegezeit pro Artikel dadurch erreicht, dass die zu entleerenden Aufnahmeplätze von einer Ein- und Auslagerungsvorrichtung entleert werden, die zu entleerenden Aufnahmeplätze einzeln oder in Gruppen nacheinander entleert werden und für den Entleervorgang die Zwischenlagervorrichtung in der Weise bewegt wird, dass die zu entleerenden Aufnahmeplätze nacheinander der Ein- und Auslagerungsvorrichtung zugeführt werden. Diese Automatisierung des Entleerungsvorganges hat den Vorteil, dass der Kommissionierer von der Entleerungsaufgabe entbunden wird und sofort eines neuen Kommissionierauftrag beginnen kann. Eine Personalbindung ist nicht mehr gegeben.

Eine weitere Optimierung wird dadurch erreicht, dass die mit Sammelmitteln zur Aufnahme der gesammelten Artikel zu befüllenden Aufnahmeplätze von einer Ein- und Auslagerungsvorrichtung befüllt werden, die zu befüllenden Aufnahmeplätze einzeln oder in Gruppen nacheinander befüllt werden und für den Befüllvorgang die Zwischenlagervorrichtung in der Weise bewegt wird, dass die zu befüllenden Aufnahmeplätze nacheinander der Ein- und Auslagerungsvorrichtung zugeführt werden. Somit kann der Kommissionierer auch von dem Befüllvorgang entlastet werden.

In vorteilhafter Weise wird eine mechanisch einfache Bauweise der Zwischenlagervorrichtungen dadurch erreicht, dass die Zwischenlagervorrichtung für den Entleervorgang und/oder den Befüllvorgang von einem Linearförderer horizontal bewegt und von einem Hubtisch vertikal bewegt wird.

Vorzugsweise werden über die Ein- und Auslagerungsvorrichtung die Sammelmittel zur Aufnahme der gesammelten Artikel von der Ein- und Auslagerungsvorrichtung in die Aufnahmeplätze der Zwischenlagervorrichtung hinein geschoben. Diese schiebende Förderung ist auch für das Hinausschieben der Sammelmittel mit den gesammelten Artikeln oder der gesammelten Artikel von dem Aufnahmeplatz der Zwischenlagervorrichtung auf einen angrenzenden Abzugförderer vorgesehen.

Vorzugsweise ist vorgesehen, dass der Linearförderer auf dem Hubtisch angeordnet ist.

In konstruktiver Ausgestaltung ist vorgesehen, dass die Vorrichtung zum Befüllen und/oder Entleeren einen Abzugförderer umfasst, der an einen Aufnahmeplatz der zu entleerenden und/oder zu befüllenden Zwischenlagervorrichtung angrenzt.

Konstruktiv besonders einfach ist, dass der Abzugförderer und die Ein- und Auslagerungsvorrichtung gegenüberliegend angeordnet und die Ein- und Auslagerungsvorrichtung ein horizontal in Ein- und Auslagerungsrichtung ein- und ausfahrbares Schieberelement aufweist.

Die Zwischenlagervorrichtung ist konstruktiv besonders einfach regalartig mit einer Vielzahl von in Zeilen und Spalten angeordneten Aufnahmeplätzen ausgebildet. Hiermit entfallen mechanische Teile für den Befüll- und/oder Entleervorgang an der Zwischenlagervorrichtung.

In weiterer Vereinfachung sind die Aufnahmeplätze in Ein- und Auslagerungsrichtung gesehen zu beiden Richtungen hin offen.

Nachfolgend wird die Erfindung an Hand eines in einer Zeichnung dargestellten Ausführungsbeispiels näher erläutert. Es zeigen:
Figur 1 eine schematische Ansicht einer Vorrichtung zum Entleeren von Artikeln aus einer Zwischenlagervorrichtung und
Figur 2 eine Ansicht von Figur 1 entlang der Schnittlinie A-A.

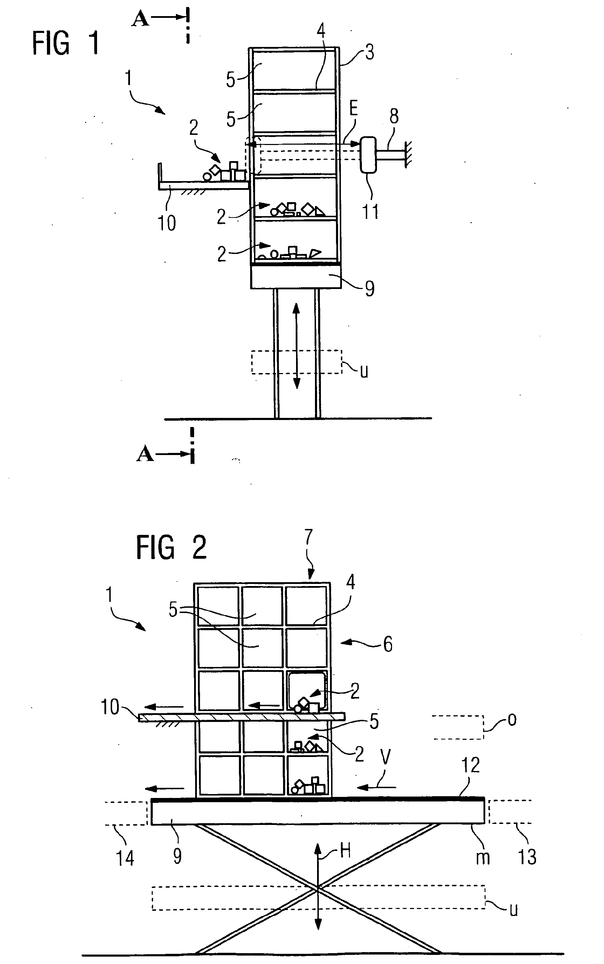

Die Figuren 1 und 2 zeigen eine Vorrichtung 1 zum Entleeren von Artikeln 2 aus einer Zwischenlagervorrichtung 3 eines Kommissioniersystems nach dem Prinzip "Mann zur Ware" in verschiedenen Ansichten. Die Zwischenlagervorrichtung 3 ist hierbei regalartig ausgebildet und weist mehrere übereinander angeordnete Aufnahmeflächen 4 auf, die mehrere Aufnahmeplätze 5 für Artikel 2 nebeneinander aufweisen können. Jeder Aufnahmeplatz 5 bildet somit ein Regalfach, das quaderförmig und oben, unten sowie an den Seiten von Wänden begrenzt ist. Hierbei ist die untere Wand die Aufnahmefläche 4. In der horizontalen Ein- und Auslagerungsrichtung E in Bezug auf die Artikel 2 gesehen ist der Aufnahmeplatz 5 somit nach vorne und hinten offen, um ein Befüllen und Entleeren des Aufnahmeplatzes 5 zu gestatten. In dem vorliegenden Ausführungsbeispiel weist die Zwischenlagervorrichtung 3 fünfzehn Aufnahmeplätze 5 in einem Raster von jeweils drei Aufnahmeplätzen 5 horizontal in Zeilen 6 nebeneinander und fünf Aufnahmeplätzen 5 vertikal in Spalten 7 übereinander auf. Alle Aufnahmeplätze 5 sind hierbei gleich groß. Je nach Kommissionieraufgabe können die Aufnahmeplätze 5 auch voneinander abweichende Größen haben. Die Zwischenlagervorrichtung 3 kann auf Grund seiner Regalform auch als Kommissioniergestell bezeichnet werden. Diese Zwischenlagervorrichtung 3 zeichnet sich im Wesentlichen dadurch aus, dass sie keine Hilfsmittel zum Befüllen und/oder Entleeren der Aufnahmeplätze 5 aufweist.

Da im vorliegenden Ausführungsbeispiel relativ kleinvolumige Artikel 2 zu kommissionieren sind, erfolgt deren Ablage beziehungsweise Zwischenlagerung von dem Kommissionierer während seines Weges durch den Lagerbereich direkt auf der Aufnahmefläche 4 eines der Aufnahmeplätze 5 der Zwischenlagervorrichtung 3. Ein Aufnahmeplatz 5 ist somit einem Kommissionierauftrag beziehungsweise Kommissionierteilauftrag zugeordnet. Es ist auch denkbar, in den Aufnahmeplätzen 5 vor Beginn des Kommissioniervorgangs die nicht dargestellten Sammelmittel abzustellen, die dann während des Kommissioniervorgangs mit Artikeln 2 befüllt werden. Diese Sammelmittel können als Behälter, Kartons, Wannen oder Paletten ausgebildet sein. Wenn Sammelmittel für den Kommissioniervorgang verwendet werden, können in Ein- und Auslagerungsrichtung E gesehen auch mehrere Sammelmittel in einem Aufnahmeplatz 5 der Zwischenlagervorrichtung 3 abgestellt werden.

Diese Zwischenlagervorrichtung 3 ist Bestandteil eines nicht dargestellten Wagens, von dem die Zwischenlagervorrichtung 3 getragen wird. Der Wagen kann von Hand geschoben oder auch angetrieben von dem Kommissionierer für den Kommissioniervorgang durch den Lagerbereich bewegt werden.
Im vorliegenden Ausführungsbeispiel ist die Zwischenlagervorrichtung 3 von dem Wagen trennbar, so dass zumindest für den Zeitraum des Entleerens der Zwischenlagervorrichtung 3 von den Artikeln 2 beziehungsweise von den Sammelmitteln mit den Artikeln 2 die Zwischenlagervorrichtung 3 von dem Wagen getrennt ist. Hierdurch wird die Handhabung der Zwischenlagervorrichtung 3 während der Befüll- und Entleervorgänge und auch bei einem Transport zwischen mehreren Kommissionierzonen erleichtert. Es ist auch möglich, dass die Zwischenlagervorrichtung 3 fest mit dem Wagen verbunden ist beziehungsweise ein Bestandteil des Wagens ist.

Zu Beginn des Kommissioniervorgangs ist eine Zwischenlagervorrichtung 3 mit Sammelmitteln zu beladen und am Ende des Kommissioniervorgangs sind die Sammelmittel beziehungsweise die gesammelten Artikel 2 aus der Zwischenlagervorrichtung 3 zu entleeren. Dieser Entleervorgang findet unter Zuhilfenahme der Vorrichtung 1 statt. Bei einer Verwendung von Sammelmitteln kann diese Vorrichtung 1 auch für das Befüllen der Zwischenlagervorrichtung 3 mit Sammelmitteln verwendet werden.

Die Vorrichtung 1 zum Entleeren der Zwischenlagervorrichtung 3 besteht im Wesentlichen aus einer Ein- und Auslagerungsvorrichtung 8, einem Hubtisch 9 und einem Abzugsförderer 10. In fördertechnischer Hinsicht ist die Vorrichtung 1 zwischen einem Zufuhrförderer 13 und einem Abführförderer 14 angeordnet.

Am Ende des Kommissioniervorganges wird die Zwischenlagervorrichtung 3 auf dem Zufuhrförderer 13 abgestellt. Falls der Hubtisch 9 sich noch nicht in seiner Mittelstellung m in Bezug auf die Hub- und Senkrichtung H befindet, wird dieser entsprechend angehoben beziehungsweise abgesenkt, so dass die Förderebenen des Zufuhrförderers 13 und des Hubtisches 9 miteinander fluchten. Hierbei ist vorher die Zwischenlagervorrichtung 3 von dem Wagen getrennt worden. Auch ist es möglich, die Zwischenlagervorrichtung 3 zusammen mit dem Wagen auf dem Hubtisch 9 abzustellen und dort zu arretieren. Sobald der Hubtisch 9 in der Mittelstellung m und frei ist, wird die zu entleerende Zwischenlagervorrichtung 3 von dem Zufuhrförderer 13 in Verschieberichtung V gefördert bis die Zwischenlagervorrichtung 3 auf dem Hubtisch 9 ihre Abstellposition erreicht hat.
In der Abstellposition grenzt die Zwischenlagervorrichtung 3 mit einem ihrer Aufnahmeplätze 5 der mittleren Zeile 6 an den Abzugförderer 10 an. Vorzugsweise ist dies der Aufnahmeplatz 5 in der ersten beziehungsweise letzten Spalte 7 also an den Rand der Zwischenlagervorrichtung 3 angrenzend. Auf der dem Abzugsförderer 10 gegenüberliegenden Seite ist eine Ein- und Auslagerungsvorrichtung 8 angeordnet, die ebenfalls an die auf dem Hubtisch 9 ruhende Zwischenlagervorrichtung 3 angrenzt. Mittels der Ein- und Auslagerungsvorrichtung 8 werden die in dem Aufnahmeplatz 5 gesammelten Artikel 2 aus dem Aufnahmeplatz heraus auf den angrenzenden Abzugsförderer 10 gefördert. Die Ein- und Auslagerungsvorrichtung 8 ist hierfür als Schieber ausgebildet, der in entsprechender Weise ein Schieberelement 11 aufweist, das eine an den Öffnungsquerschnitt des Aufnahmeplatzes 5 angepasste Außenkontur aufweist, um eine vollständige Leerung des Aufnahmeplatzes 5 zu gewährleisten. In der Figur 1 ist das Schieberelement 12 in der eingezogenen Wartestellung und strichliniert in der ausgefahrenen Endstellung dargestellt. In der Endstellung ragt zumindest ein Teil des Schieberelements 12 aus den Aufnahmeplatz in Ein- und Auslagerungsrichtung E hinaus.

Da nur eine einzelne Ein- und Auslagerungsvorrichtung 8 vorgesehen ist, erfolgt die Entleerung der insgesamt fünfzehn Aufnahmeplätze 5 nacheinander und taktweise. Außerdem sind die Ein- und Auslagerungsvorrichtung 8 und der Abzugsförderer 10 in Bezug auf ihre Ein- und Auslagerungsbereiche beziehungsweise seinen Abzugsbereich ortsfest angeordnet, so dass der jeweilig zu entleerende Aufnahmeplatz 5 in die Entleerungsposition zwischen Ein- und Auslagerungsvorrichtung 8 und der Abzugsförderer 10 bewegt werden muss. Hierfür wird die Zwischenlagervorrichtung 3 mit den Aufnahmeplätzen 5 in die Abstellposition auf dem Hubtisch 9 gefördert und auf dem Hubtisch 9 ist zusätzlich ein Linearförderer 12 angeordnet, mit dem die Zwischenlagervorrichtung 3 horizontal in Verschieberichtung V bewegt werden kann. Dieser Linearförderer 12 kann beispielsweise als Rollenbahn oder Bandförderer ausgebildet sein. Nachdem also der erste Aufnahmeplatz 5 entleert worden ist, wird über den Linearförderer 12 die Zwischenlagervorrichtung 3 soweit in oder gegen die Verschieberichtung V bewegt, bis der dem bereits entleerten Aufnahmeplatz 5 benachbarte Aufnahmeplatz 5 in der gleichen Zeile 6 in die Entleerungsposition zwischen der Ein- und Auslagerungsvorrichtung 8 und dem Abzugsförderer 10 gelangt ist. Dann erfolgt dessen Entleerung bis alle Aufnahmeplätze 5 dieser Zeile 6 entleert sind. Anschließend wird dann der Hubtisch 9 in der Hub- und Senkrichtung H angehoben und die Aufnahmeplätze 5 der darunter liegenden Zeile 6 werden entleert. Dieser Vorgang wird wiederholt bis alle Aufnahmeplätze 5 aller Zeilen 6 entleert sind. Der Hubtisch 9 bewegt sich hierbei ausgehend von seiner Mittelstellung m in seine unterste Stellung u und anschließend über die Mittelstellung m in seine oberste Stellung o, um am Ende des Kommissioniervorganges wieder in seine Mittelstellung m zurück zu kehren.

Der Abzugsförderer 12 kann als Bandförderer oder Rollenbahn ausgebildet sein, auf den die zu entleerenden Artikel 2 geschoben werden. Auch kann der Abzugsförderer 12 ein Fördersystem für Sammelmittel wie Behälter sein, in die dann jeweils kommissionierauftragsbezogen die Artikel 2 entleert werden.

Des Weiteren ist den Figuren zu entnehmen, dass die Zwischenlagervorrichtungen 3 dem Hubtisch 9 der Vorrichtung 1 über einen Zuführförderer 13 zugeführt werden, wenn dieser sich in seiner Mittelstellung m befindet. Am Ende des Entleervorgangs bewegt sich der Hubtisch 9 wieder in seine Mittelstellung m zurück und die Zwischenlagervorrichtung 3 wird von dem Linearförderer 12 in Verschieberichtung V auf einen angrenzenden Abführförderer 14 übergeben, von dem die Zwischenlagervorrichtung 3 wieder in eine Bereitschaftsstellung für einen neuen Kommissioniervorgang gefördert wird. In der Mittelstellung m des Hubtisches 9 fluchten die Transportebenen des Zuführförderer 13, des Linearförderers 12 und des Abführförderers 14.

Grundsätzlich ist es auch denkbar, dass anstatt einer Ein- und Auslagerungsvorrichtung 8 mehrere Ein- und Auslagerungsvorrichtungen 8 nebeneinander angeordnet und somit eine komplette Zeile 6 oder mehrere Aufnahmeplätze 5 einer Zeile 6 gleichzeitig entleert werden können. Der Abzugsförderer 10 muss dann entlang der Zeile 6 von Aufnahmeplätzen 5 verlaufen und der Abzugsförderer 10 Mittel zur Beibehaltung deren kommissionierungsbedingten Trennung der Artikel 2 aufweisen.

Auch können anstatt einer Ein- und Auslagerungsvorrichtung 8 mehrere Ein- und Auslagerungsvorrichtungen 8 übereinander angeordnet und somit eine komplette Spalte 7 oder mehrere Aufnahmeplätze 5 einer Spalte 7 gleichzeitig entleert werden können, wobei dann die Abzugsförderer 10 aufwendiger ausgestaltet sein müssen, um eine vertikale Zusammenführung der Artikel 2 unter Beibehaltung deren kommissionierungsbedingter Trennung zu erreichen. Für den Fall, dass eine ausreichende Anzahl von Ein- und Auslagerungsvorrichtungen 8 vorhanden sind, um eine vollständige Spalte 7 von Aufnahmeplätzen 5 entleeren zu können, kann der Hubtisch 9 entfallen.

## Patentansprüche

1. Verfahren zum Befüllen und/oder Entleeren einer Zwischenlagervorrichtung (3) eines Kommissioniersystems, bei dem nach dem Kommissioniervorgang die mit gesammelten Artikeln (2) belegten und/oder mit Sammelmitteln zur Aufnahme der gesammelten Artikel (2) belegten Aufnahmeplätze (5) der Zwischenlagervorrichtung (3) geleert werden, **dadurch gekennzeichnet, dass** die zu entleerenden Aufnahmeplätze (5) von einer Ein- und Auslagerungsvorrichtung (8) entleert werden, die zu entleerenden Aufnahmeplätze (5) einzeln oder in Gruppen nacheinander entleert werden und für den Entleervorgang die Zwischenlagervorrichtung (3) in der Weise bewegt wird, dass die zu entleerenden Aufnahmeplätze (5) nacheinander der Ein- und Auslagerungsvorrichtung (8) zugeführt werden.

2. Verfahren nach Anspruch 1, **dadurch gekennzeichnet, dass** die mit Sammelmitteln zur Aufnahme der gesammelten Artikel (2) zu befüllenden Aufnahmeplätze (5) von einer Ein- und Auslagerungsvorrichtung (8) befüllt werden, die zu befüllenden Aufnahmeplätze (5) einzeln oder in Gruppen nacheinander befüllt werden und für den Befüllvorgang die Zwischenlagervorrichtung (3) in der Weise bewegt wird, dass die zu befüllenden Aufnahmeplätze (5) nacheinander der Ein- und Auslagerungsvorrichtung (8) zugeführt werden.

3. Verfahren nach Anspruch 1 oder 2, **dadurch gekennzeichnet, dass** die Zwischenlagervorrichtung (3) für den Entleervorgang und/oder den Befüllvorgang von einem Linearförderer (12) horizontal bewegt und von einem Hubtisch (9) vertikal bewegt wird.

4. Verfahren nach einem der Ansprüche 1 bis 3, **dadurch gekennzeichnet, dass** die Sammelmittel zur Aufnahme der gesammelten Artikel (2) von der Ein- und Auslagerungsvorrichtung (8) in die Aufnahmeplätze (5) der Zwischenlagervorrichtung (3) hinein geschoben werden.

5. Verfahren nach einem der Ansprüche 1 bis 4, **dadurch gekennzeichnet, dass** die Sammelmittel mit den gesammelten Artikeln (2) oder die gesammelten Artikel (2) von der Ein- und Auslagerungsvorrichtung (8) von dem Aufnahmeplatz (5) der Zwischenlagervorrichtung (3) auf einen angrenzenden Abzugförderer (10) hinaus geschoben werden.

## Claims

1. Method of filling and/or emptying a buffer storage arrangement (3) of an order-picking system, in which, after the order-picking process, the receiving locations (5) of the buffer storage arrangement (3), which are occupied by articles (2) which have been collected and/or by collecting means for receiving the articles (2) which are collected, are emptied, **characterised in that** the receiving locations (5) to be emptied are emptied by a storage-entry and storage-expulsion device (8), the receiving locations (5) to be emptied are emptied in succession individually or in groups, and for the emptying process the buffer storage arrangement (3) is moved in such a way that the receiving locations (5) to be emptied are fed in succession to the storage-entry and storage-expulsion device (8).

2. Method according to claim 1, **characterised in that** the receiving locations (5) which are to be filled with collecting means to receive the articles (2) which are collected are filled by an storage-entry and storage-expulsion device (8), the receiving locations (5) to be filled are filled in succession individually or in groups, and for the filling process the buffer storage arrangement (3) is moved in such a way that the receiving locations (5) to be filled are fed in succession to the storage-entry and storage-expulsion device (8).

3. Method according to claim 1 or 2, **characterised in that**, for the emptying operation and/or the filling operation, the buffer storage arrangement (3) is moved horizontally by a linear feeder (12) and vertically by a lifting table (9).

4. Method according to one of claims 1 to 3, **characterised in that** the collecting means for receiving the articles (2) which are collected are slid into the receiving locations (5) of the buffer storage arrangement (3) by the storage-entry and storage-expulsion device (8).

5. Method according to one of claims 1 to 4, **characterised in that** the collecting means holding the articles (2) which are collected, or the articles (2) which are collected, are slid out by the storage-entry and storage-expulsion device (8) from the receiving location (5) of the buffer storage arrangement (3) and out onto an adjoining takeaway conveyor (10).

## Revendications

1. Procédé de remplissage et/ou de vidage d'un dispositif de stockage temporaire (3) d'un système de préparation de commandes, dans lequel les emplacements de réception (5) du dispositif de stockage temporaire (3), qui sont dotés des articles collectés (2) et/ou dotés des moyens de collecte destinés à recevoir les articles collectés (2), sont vidés après le processus de préparation de commandes, **caractérisé en ce que** les emplacements de réception (5) à vider sont vidés par un dispositif de stockage et de déstockage (8), les emplacements de réception (5) à vider sont vidés l'un après l'autre individuellement ou par groupes et le dispositif de stockage temporaire (3) est déplacé en vue du processus de vidage de façon que les emplacements de réception (5) à vider sont amenés l'un après l'autre au dispositif de stockage et de déstockage (8).

2. Procédé selon la revendication 1, **caractérisé en ce que** les emplacements de réception (5) à remplir avec les moyens de collecte destinés à recevoir les articles collectés (2) sont remplis par un dispositif de stockage et de déstockage (8), les emplacements de réception (5) à remplir sont remplis l'un après l'autre individuellement ou par groupes et le dispositif de stockage temporaire (3) est déplacé en vue du processus de remplissage de façon que les emplacements de réception (5) à remplir sont amenés l'un après l'autre au dispositif de stockage et de déstockage (8).

3. Procédé selon la revendication 1 ou 2, **caractérisé en ce que** le dispositif de stockage temporaire (3) est déplacé horizontalement en vue du processus de vidage et/ou du processus de remplissage par un convoyeur linéaire (12) et est déplacé verticalement par une table élévatrice (9).

4. Procédé selon l'une des revendications 1 à 3, **caractérisé en ce que** les moyens de collecte destinés à recevoir les articles collectés (2) sont poussés par le dispositif de stockage et de déstockage (8) dans les emplacements de réception (5) du dispositif de stockage temporaire (3).

5. Procédé selon l'une des revendications 1 à 4, **caractérisé en ce que** les moyens de collecte dotés des articles collectés (2) ou les articles collectés (2) sont poussés de l'emplacement de réception (5) du dispositif de stockage temporaire (3) par le dispositif de stockage et de déstockage (8) et placés sur un convoyeur d'enlèvement adjacent (10).
